# EUROPEAN PATENT APPLICATION

(11) **EP 4 793 075 A1**
(43) Date of publication of application: **19.08.2026**
(21) Application number: 26158586.3
(22) Date of filing: 13.02.2026
(51) Int. Cl.: B60K 11/06, B60K 1/00, B60H 1/00

(54) **MOTOR VEHICLE WITH LATTICE STRUCTURE HAVING A HEAT DISSIPATION FUNCTION**

(30) Priority: 14.02.2025 IT 202500002853
(71) Applicant: FERRARI S.p.A., 41100 Modena (IT)
(72) Inventor: D'AGOSTINO, Simone, 41100 MODENA (IT); ANGIUS, Pierandrea, 41100 MODENA (IT); BALDINI, Andrea, 41100 MODENA (IT); MANZONI, Flavio, 41100 MODENA (IT); PALAZZANI, Carlo, 41100 MODENA (IT); SEDDA, Salvatore, 41100 MODENA (IT)
(74) Representative: Studio Torta S.p.A.

(57) **Abstract**

Motor vehicle comprising a body, in turn comprising a shell (7, 10) internally defining a cavity (7b, 7c) arranged to be externally struck by an airflow coming from outside the motor vehicle during an advancement of the motor vehicle, and permeable to the airflow, such that a portion of the airflow penetrates inside the cavity (7b, 7c), a lattice structure (40) internally attached to the shell (7, 10) so as to form a single body with the shell (7, 10) and arranged to at least partially fill the cavity (7b, 7c) and define a network of ducts inside the cavity (7b, 7c) to guide said portion of the airflow through the cavity (7b, 7c) towards an outlet from the shell (7, 10), the motor vehicle further comprising a heat source (43) thermally coupled to the lattice structure (40) to conduct heat through the lattice structure (40), so that the lattice structure (40) in turn transfers the heat to the portion of the airflow.

## Description

### CROSS-REFERENCE TO RELATED APPLICATIONS

This patent application claims priority from Italian patent application no. 102025000002853 filed on February 14, 2025, the entire disclosure of which is incorporated herein by reference.

### TECHNICAL FIELD

The invention relates in general to a motor vehicle and more in particular to a motor vehicle with several distinct passenger compartments.

### PRIOR ART

As is known, motor vehicles normally have a body defining a passenger compartment for accommodating the driver and possibly one or more additional passengers.

Typically, the body further defines a plurality of compartments intended to house devices that emit heat during their operation, such as for example the motors for the propulsion of the motor vehicle, or cooling circuits along which a fluid circulates to absorb the heat emitted by the devices.

Usually, the heat is dissipated into the external environment of the motor vehicle by means of one or more radiators of the aforementioned circuits.

In general, in the sector, the need is felt to produce improved solutions for dissipating the heat. More in particular, for example, the need is felt to provide elements for the dissipation of the heat with improved efficacy with respect to the common radiators.

Furthermore, the radiators occupy space in the motor vehicle, therefore the need is also felt to occupy the spaces of the motor vehicle in an improved manner, while maintaining or even improving the dissipation ability of the heat towards the external environment.

Furthermore, the need is also felt to provide elements for the dissipation of the heat which possibly integrate multiple functions, besides the fundamental one of favoring the dissipation of the heat.

An object of the invention is to satisfy at least one of the needs set forth above.

### DESCRIPTION OF THE INVENTION

The object is achieved by a motor vehicle as defined in claim 1.

The dependent claims define particular embodiments of the invention.

### BRIEF DESCRIPTION OF THE DRAWINGS

In the following, an embodiment of the invention is described for a better understanding of the same by way of non-limiting example and with reference to the accompanying drawings wherein:
- Figure 1 is a perspective view of a motor vehicle according to the invention,

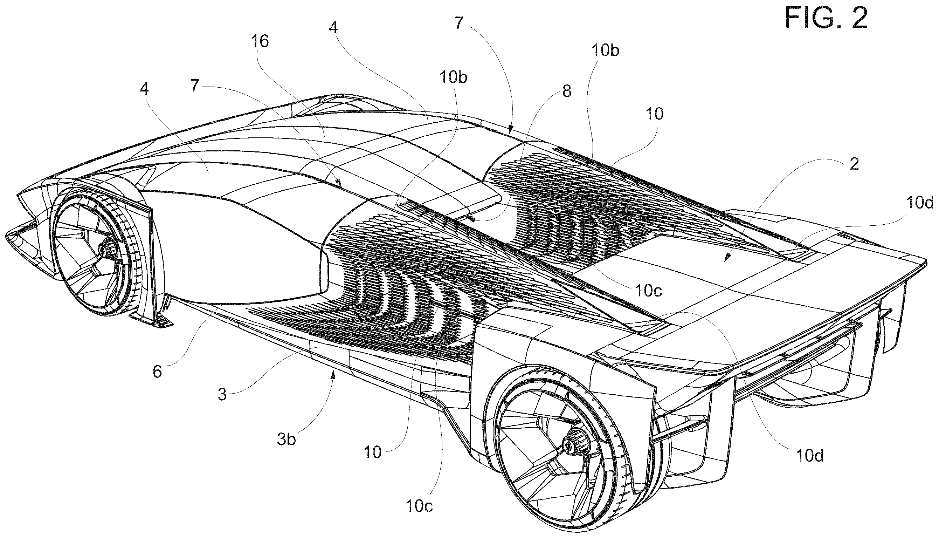

- Figure 2 is a further perspective view of the motor vehicle of Figure 1,

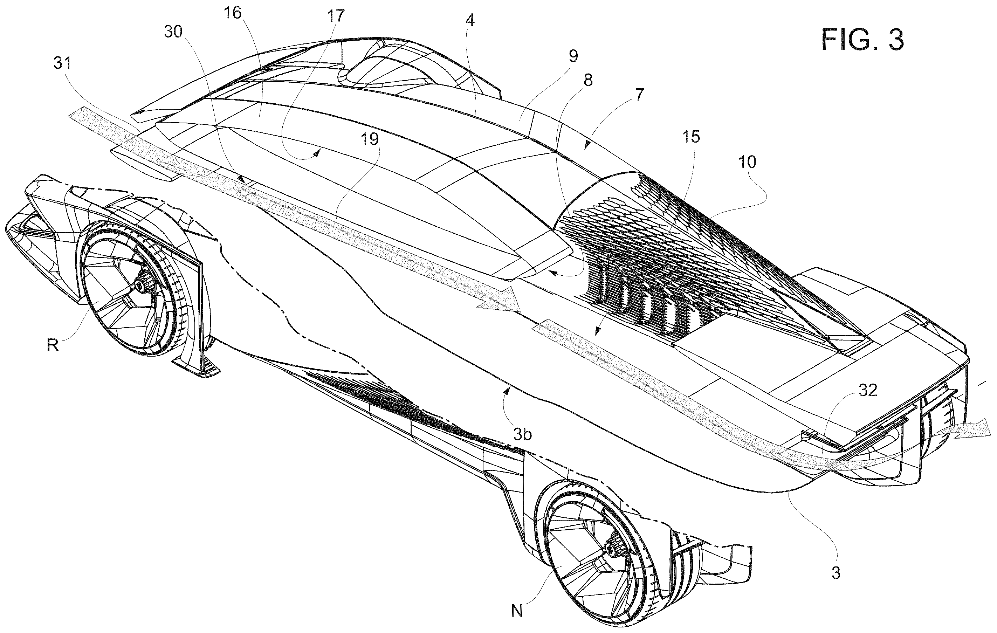

- Figure 3 is a cutaway view of the motor vehicle according to a longitudinal section plane, with schematized parts,

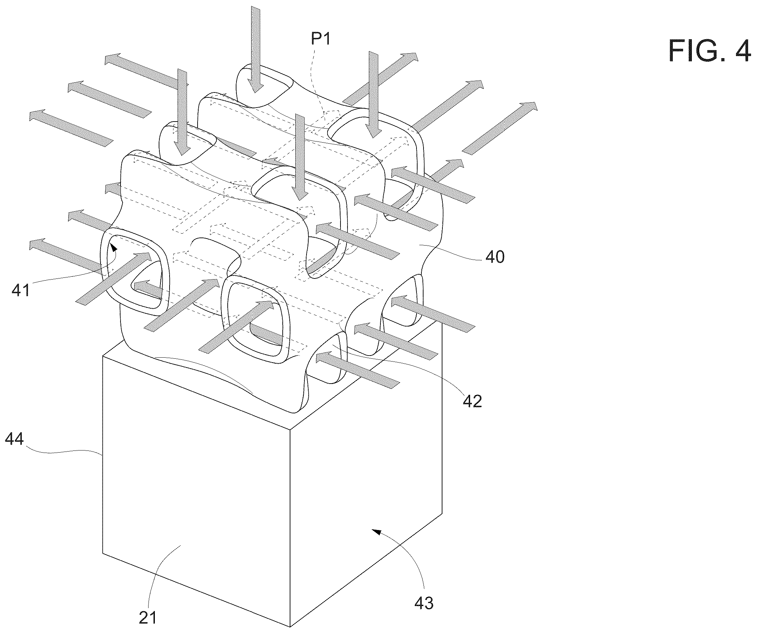

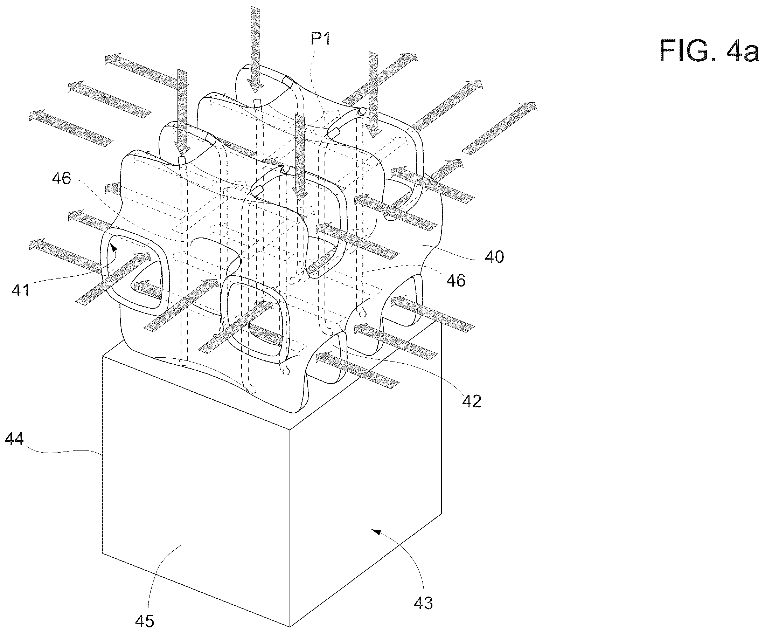

- Figures 4, 4a are schematic perspective views of a lattice structure of the motor vehicle according to respective variants,

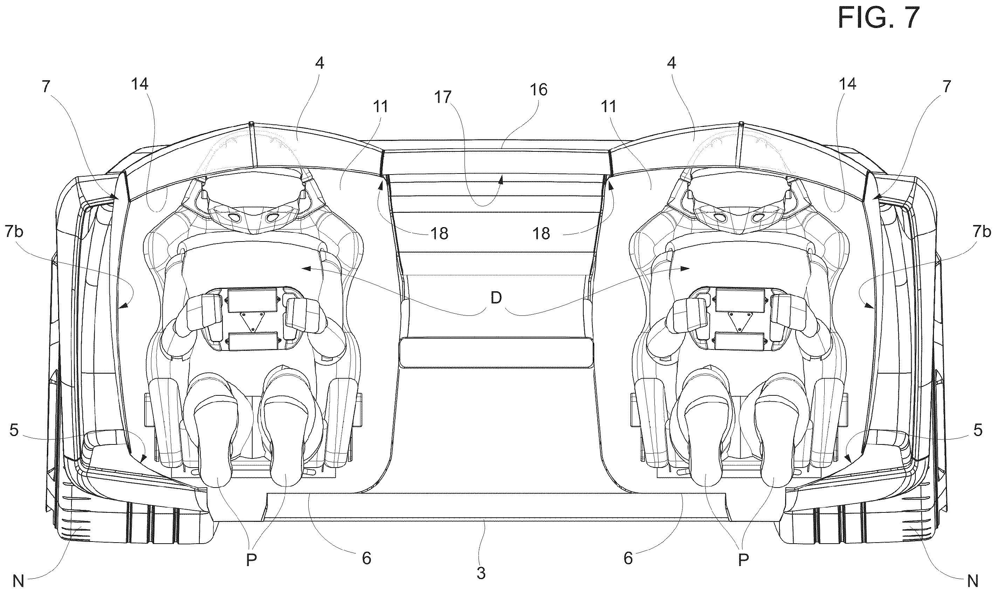

- Figures 5, 7 are respective perspective cutaway views of the motor vehicle, on an enlarged scale, according to corresponding vertical section planes, and

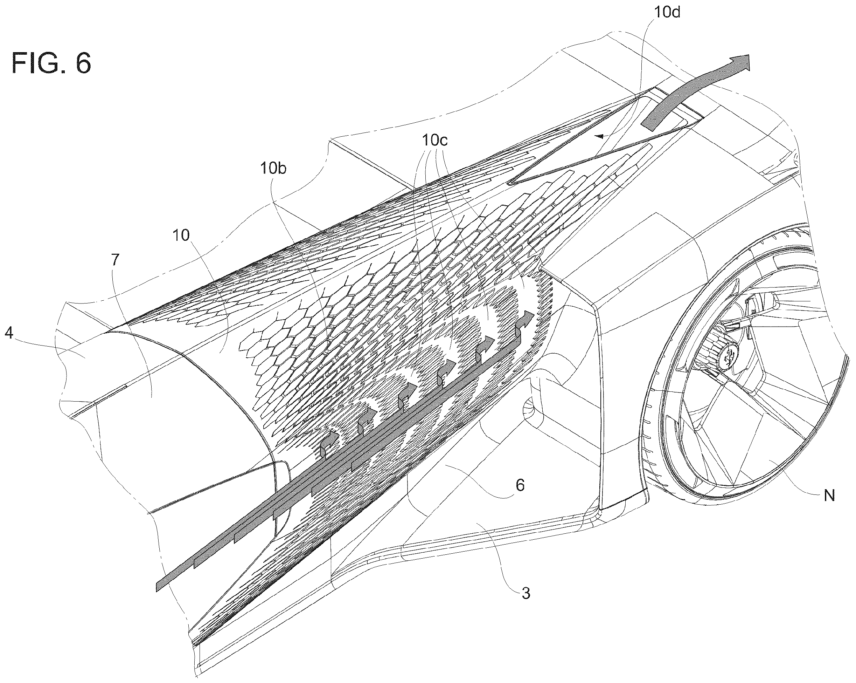

- Figure 6 is an enlarged perspective view of a rear lateral end of the motor vehicle.

### EMBODIMENTS OF THE INVENTION

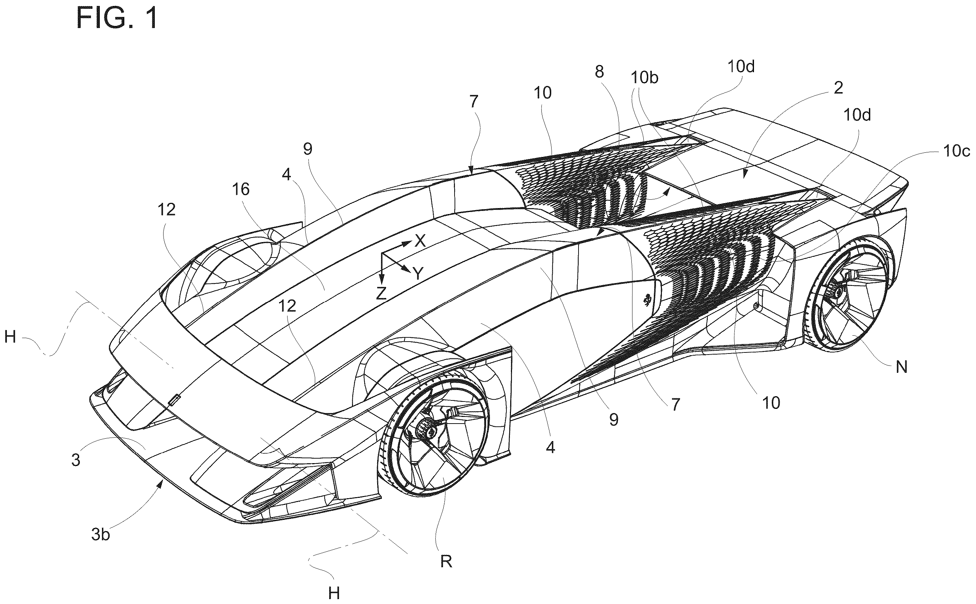

In Figure 1, reference numeral 1 is used to indicate, as a whole, a motor vehicle. Like all motor vehicles, the motor vehicle 1 has a plurality of wheels, in particular a pair of front wheels R and a pair of rear wheels N.

The motor vehicle 1 has a body reference system defined by a set of three Cartesian axes; the body reference system or more generally the motor vehicle 1 has more in detail a roll axis X, a pitch axis Y, and a yaw axis Z.

The roll axis X coincides with a longitudinal axis or a direction of advancement of the motor vehicle 1.

The pitch axis Y is horizontal, with reference to the normal use conditions of the motor vehicle 1, and orthogonal to the roll axis X.

The yaw axis Z is orthogonal to both axes X, Y and has at least one vertical component.

The motor vehicle 1 comprises a body 2, in turn comprising, as it normally occurs, a chassis defining the structural frame of the motor vehicle 1 and a bodywork carried by the chassis and defining the external surfaces of the motor vehicle 1.

The body 2 has a floorboard 3 which in particular defines the lower base of the motor vehicle 1 and thus has at least one lower surface 3b facing the road during the use of the motor vehicle 1.

The body 2 further comprises at least one shell portion 4 or more preferably a pair of shell portions 4, for example identical to each other, coupled to the floorboard 3, in particular each independently at respective opposite lateral ends of the motor vehicle 1 or more precisely of the floorboard 3 according to the axis Y.

For example, the shell portions 4 define together with the floorboard 3 respective passenger compartments 5 distinct from each other. Each passenger compartment 5 is understood as an environment adapted as a whole for accommodating a human driver in conditions suitable for driving the motor vehicle 1. Therefore, the expression "passenger compartment" excludes cramped environments and more precisely unsuitable for accommodating the driver in a posture typically apt for driving.

In greater detail, the floorboard 3 comprises further shell portions 6 respectively coupled to the shell portions 4 for forming (at least partially) corresponding shells 7 which, in particular, internally define the passenger compartments 5, respectively.

The number of the shells 7 is exemplifying and not necessarily limiting; the body 2 could also have only one shell 7 and thus in particular a shell portion 4 and a shell portion 6.

The floorboard 3 or the surface 3b preferably has a portion extending between the shells 7 according to the axis Y, for the entire longitudinal dimension of the shells 7 along the axis X. In other words, the aforementioned portion of the floorboard 3 or of the surface 3b extends along the axis X between two longitudinal ends, both extending, in turn, in width according to the axis Y between the shells 7.

Preferably, the surface 3b ends posteriorly with an aerodynamic diffuser or extractor, namely an inverted chute with a front end which is lower according to the axis Z and narrower according to the axis Y, and a rear end which is raised according to the axis Z and wider according to the axis Y.

Specifically, but not necessarily, both passenger compartments 5 are actually set up to accommodate the driver, therefore they can both comprise, for example, respective seats.

Alternatively or additionally, both passenger compartments 5 can contain respective driving means or devices D (inside the passenger compartments 5) to enable the driver to drive the motor vehicle 1. For example, each of the driving devices D can comprise a steering wheel V and pedals P (for example a brake pedal and an accelerator pedal) with functions which are per se typical and not described in further detail.

Clearly, when one of the driving devices D in one of the passenger compartments 5 is in use, the other one of the driving devices D in the other passenger compartment 5 can be disabled for safety. This can occur automatically by means of a program on a control unit (not illustrated) of the motor vehicle 1 or by means of a key which can enable only one of the driving devices D, whereas the other one remains disabled.

In this manner, the driver can choose whether to drive on the right or left side of the motor vehicle 1, by simply entering the desired passenger compartment 5.

The shells 7 have respective walls configured to define and/or circumscribe the passenger compartments 5, as well as distinct and separate from each other. Namely, the walls of each of the shells 7 do not have portions in common or do not intersect with the walls of the other one of the shells 7.

Similarly, the shell portions 4 are separate from each other, i.e. do not have parts in common or do not intersect with each other.

Preferably, like the shell portions 4, the shells 7 are respectively located at the opposite lateral ends of the motor vehicle 1 according to the axis Y.

At least one portion 8 of an external (i.e. directly exposed to the external air during use) volume or space of the motor vehicle 1 is interposed according to the axis Y between the shell portions 4 or the shells 7, whereby, in other words, the portion 8 of the external volume separates the shell portions 4 or the shells 7 from each other according to the axis Y.

The shells 7 are not limited to exclusively defining the passenger compartments 5; in particular, the shells 7 have respective front heads 9 (according to the normal direction of advancement of the motor vehicle 1), which are those that specifically define the passenger compartments 5, and respective rear tails 10 extending behind the heads 9 substantially with continuity, namely unless there are demarcation slots with negligible longitudinal dimensions (e.g. less than 10 mm) .

More generally, the shells 7 internally define respective cavities 7b, each of which can have more distinct portions, for example a first cavity portion defined by one of the passenger compartments 5 (herein specifically internally defined by one of the heads 9) and a second cavity portion 7c (herein specifically internally defined by one of the tails 10).

The first cavity portion or passenger compartment 5 and the second cavity portion 7c, for example adjacent to each other according to the axis X, can be conveniently separate according to the axis X by means of a corresponding internal finishing wall or panel 11 with a function of dividing the cavity portion 7c with respect to the passenger compartment 5.

In actual fact, specifically, each of the tails 10 is per se a shell or a shell portion, regardless of the optional presence or absence of the respective head 9, just as the cavity portion 7c is the cavity internally defined by the latter shell or shell portion.

Furthermore, the fact that the tail 10 is behind the head 9 is optional, therefore the tail 10 could be replaced by a front or intermediate element or portion of the shell 7.

Therefore, in this description, the tail 10 and the cavity portion 7c may always be more generally considered as (or more generically be replaced by) a generic shell and a generic cavity. Furthermore, in particular, the characteristics associated with the tail 10 and the cavity portion 7c belong or are applicable, more generally, to the shell 7 and the cavity 7b of which they form respectively part. Furthermore, the characteristics described in the foregoing and in the following for the shell 7 and the cavity 7b may be more specifically applicable or belong to the tail 10 and the cavity portion 7c, respectively.

Each of the tails 10 or the shells 7 is independently permeable to air or porous and arranged to be externally struck by the aerodynamic flow of the motor vehicle 1 (i.e. generated by an advancement of the motor vehicle 1), namely an airflow coming from outside the motor vehicle during an advancement of the motor vehicle 1, so that a portion of the airflow can pass or penetrate inside the cavity portion 7c or the cavity 7b.

Preferably, each of the tails 10 or shells 7 is independently directly exposed to the outside of the motor vehicle 1 and to the aerodynamic flow. In other words, each of the tails 10 or shells 7 independently has at least one surface defining an external surface of the body 2 or of the motor vehicle 1, namely a surface directly exposed to the outside of the motor vehicle 1 and to the aerodynamic flow.

According to a possible exemplifying and non-limiting aspect, the surface directly exposed to the outside of the motor vehicle 1 and to the aerodynamic flow is physically placed outside the motor vehicle 1 and/or is externally visible from the outside of the motor vehicle 1, for example during the advancement of the motor vehicle 1, and/or is directly struck by the aerodynamic flow outside the motor vehicle, and/or is completely uncovered outside the motor vehicle 1, namely for example not covered and/or not hidden and/or not enclosed by other elements or components of the bodywork or the body 2.

According to a possible exemplifying and non-limiting aspect, the outside of the motor vehicle 1 is the external environment externally surrounding the entire motor vehicle 1. According to a possible exemplifying and non-limiting aspect, the external environment is the space on the outside of any panel or element of the bodywork or body 2 and/or on the outside of volumes internally delimited by the body 2. According to a possible exemplifying and non-limiting aspect, the external environment does not comprise any internal cavity and/or structural interspace and/or compartment covered by the motor vehicle 1 or the body 2.

In particular, each of the tails 10 can be at least partially formed by a mosaic or mesh 10b with gaps between the mosaic tiles or between the full parts of the mesh, so that the gaps allow the portion of the airflow to pass into the cavity portions 7c through the respective tails 10. Alternatively or additionally, the tails 10 comprise one or more slits or louvers 10c which put the cavity portions 7c in communication with the outside.

Alternatively or additionally, each of the tails 10 has one or more openings or outlets 10d, in particular arranged at the respective rear ends, more in particular facing the back of the motor vehicle 1, to enable the outflow of the portion of the airflow passed inside the cavity portions 7c towards the outside or more in particular the back of the motor vehicle 1.

Preferably, in the illustrated embodiment, the access to the passenger compartments 5 is allowed by means of movable doors or wings 12 forming part of the shell portions 4. The wings 12 are indeed movable with respect to the respective shell portions 6. For example, the wings 12 comprise at least a part of the respective upper external surfaces of the shell portions 4 and are hinged, in particular anteriorly, on the body 2 or more precisely on the floorboard 3 about axes H parallel to the axis Y, so that the wings 12 can be rotated about the axes H, in particular towards the front of the motor vehicle 1, to enable an access to the respective passenger compartments 5 from above.

For clarity, in this description, expressions such as front, anteriorly, rear, posteriorly, in front, behind, and the like, refer to the normal direction of advancement of the motor vehicle 1.

Similarly, expressions such as upper, lower, high, low, and the like, refer to the normal use conditions of the motor vehicle 1.

Some zones of the shell portions 4, in an exemplifying and non-limiting manner, can be at least partially transparent to enable visibility, for example frontal and lateral, of the outside of the motor vehicle 1 from the inside of the passenger compartments 5. This is not anyway necessary, since the driving of the motor vehicle 1 could anyway occur for example by means of a virtual reality viewer applicable to the driver and receiving information of visual type relative to the outside of the motor vehicle 1 from cameras appropriately positioned on external zones of the body 2.

Each of the shell portions 4 or the shells 7 or the tails 10 (or at least one thereof) preferably comprises a dome 14 with concavity facing the floorboard 3. The dome 14 specifically defines, in a non-limiting manner, a roof of the respective passenger compartment 5.

In particular, the dome 14 has at least one transverse section, namely according to a plane orthogonal to the axis X, having the shape of an ellipse or circumference arc according to embodiments not illustrated.

Alternatively or additionally, each of the shell portions 6 (or at least one thereof) has opposite concavity with respect to the dome 14 and is coupled hereto to form the respective shell 7. Nevertheless, in general, the shell portion 6 could also be flat in other embodiments, rather than necessarily having a concavity, in particular opposite with respect to the dome 14.

Specifically, the shell portion 6 therefore defines a kind of cradle or tub internally delimiting the lower zone of the respective passenger compartment 5 or more generally of the respective cavity 7b.

In particular, the shell portion 6 defines a floor of the respective passenger compartment 5 or the respective cavity 7b.

On the whole, each shell 7 or tail 10 (or at least one thereof) has a generally ogival or torpedo-shaped form, namely substantially cylindrical or ellipsoidal with at least one longitudinal end (according to the axis X) tapered and the other opposite longitudinal end preferably truncated or wedge-shaped, tendentially as it occurs in a bullet or torpedo. Specifically, the tapered longitudinal end is the rear one.

In general, the portion 8 of the external volume between the shell portions 4 or the shells 7 or the tails 10 is preferably inferiorly delimited by an upper surface 15 of the floorboard 3. In particular, the upper surface 15 extends between the shell portions 4 or between the shells 7 or between the tails 10 or between the shell portions 6 according to the axis Y. Still more in particular, the upper surface 15 extends between respective longitudinal ends along the axis X, the longitudinal ends extending, in turn, according to the axis Y between the shell portions 4 or between the shells 7 or between the tails 10 or between the shell portions 6.

Preferably, the body 2 comprises a bridge element 16 extending between the shell portions 4 or the shells 7 according to the axis Y so as to structurally connect the shell portions 4 or the shells 7 to each other.

More preferably, the bridge element 16 is configured to make or establish a visual communication, namely so that the driver can see the interior of one of the passenger compartments 5 or of the cavity 7b from the inside of the other one, and/or a fluidic communication between the passenger compartments 5 or the cavities 7b.

In detail, the bridge element 16 internally defines a tube or duct 17 extending according to the axis Y between two end openings 18 facing each other and respectively obtained on the shell portions 4 or the shells 7 so as to put the duct 17 in communication with both passenger compartments 5 or the cavities 7b.

In particular, the duct 17 and/or the respective end openings 18 are in any case shaped so that an actual physical passage of the driver from one passenger compartment 5 to the other is prevented through the duct 17, whereby the latter actually allows the visual and/or fluidic communication between the passenger compartments 5, but it does not allow a movement of the driver from one passenger compartment 5 to the other.

In other words, the duct 17 is inappropriate for accommodating the driver, whereby it does not define nor form part of a passenger compartment.

According to an example, the end openings 18 could be closed by respective at least partially transparent panels, so that the visual communication is established, whereas the fluidic communication is instead prevented.

As it can be observed for example in the figures, at least one part of the portion 8 of the external volume can be defined by a channel portion 19 vertically arranged below the bridge element 16, or more precisely between the upper surface 15 and the bridge element 16, and more in particular between the shell portions 4 or the shells 7 according to the axis Y.

Conveniently, the bridge element 16 can have an upper external surface arranged in continuity or flush with at least a part of the upper external surfaces of the shell portions 4.

In particular, the bridge element 16 ends longitudinally and posteriorly at the rear ends of the heads 9, whereby a part of the portion 8 of the external volume between the tails 10 according to the axis Y is more in particular completely uncovered outside the motor vehicle 1 upwards.

On the other hand, as already described, the bridge element 16 covers the channel portion 19 from above.

The body 2 or the motor vehicle 1 further comprises lattice structures 40 internally attached to the tails 10 or shells 7, respectively.

In the following, the description will refer to only one lattice structure 40, given that the number of lattice structures 40 is not limiting (there could be only one or more) and that what is described will be applicable independently to each of the lattice structures 40 that are present.

Herein, the lattice structure 40 is specifically applied to the shell 7 or the tail 10, but it is generally applicable to any shell or shell portion of the motor vehicle 1 that is permeable to the external airflow, such that a portion thereof penetrates inside the cavity internally defined by the shell or shell portion.

The lattice structure 40 forms a single body with the respective shell 7 or tail 10, namely is joined to the respective shell 7 or tail 10 in a fixed, continuous and integral manner, namely seamlessly.

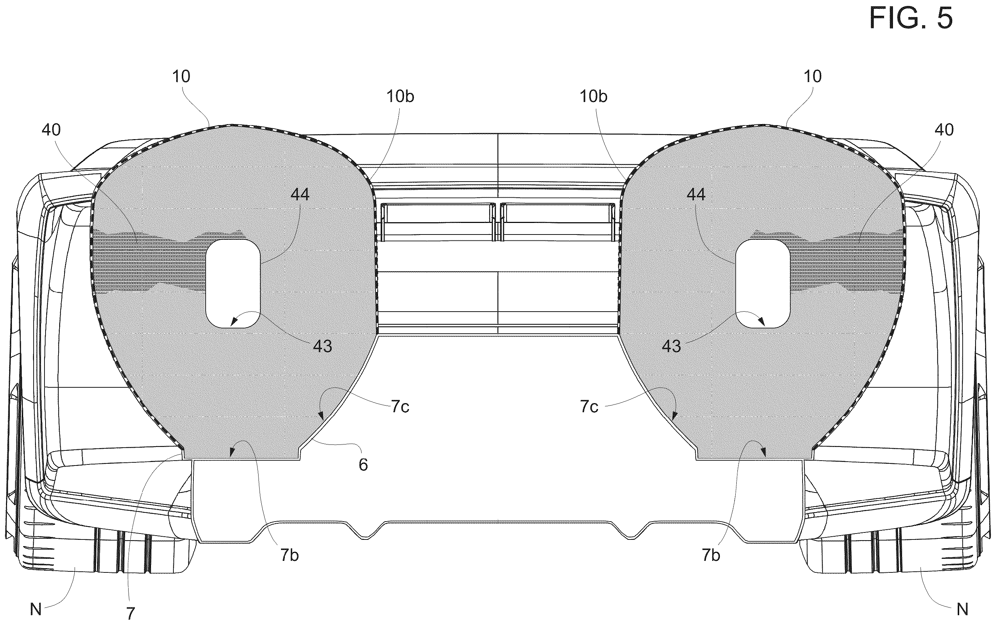

The lattice structure 40 is arranged to fill or occupy at least partially the respective cavity 7b or cavity portion 7c. In particular, the respective cavity portion 7c is completely filled or occupied, more in particular by the lattice structure 40, as well as possibly by optional further components. In Figure 5, the lattice structure 40 is illustrated schematically and partially, for clarity; in Figure 5, a part of the lattice structure 40 is illustrated as a schematic lattice, whereas the remaining part is represented as an area filled with a grey-colored background.

The lattice structure 40 is further arranged to define a network or bundle, or more generally a plurality of ducts 41 inside the cavity 7b or cavity portion 7c to guide the portion of the airflow passed inside the cavity 7b or cavity portion 7c.

The ducts 41 guide the portion of the airflow through the cavity 7b or cavity portion 7c towards the outlets 10d of the tail 10 or shell 7.

In greater detail, the ducts 41 have inlet openings exposed to the portion of the airflow which penetrates in the cavity 7b or cavity portion 7c; for example, the inlet openings communicate with the gaps of the mosaic 10b and/or with the louvers 10c to receive the portion of the airflow.

In particular, the ducts 41 develop along paths P1 through the lattice structure 40 from the inlet openings up to the outlets 10d.

The paths P1 can also extend along particularly complex directions, for example including curvilinear sections, optionally with points of non-derivability. The paths P1 extend, in particular, at least partially longitudinally, namely have sections with non-zero projections on the axis X.

The lattice structure 40 is defined more in detail by a plurality of interconnected elementary cells 42.

At least a part of the elementary cells 42 are open cells or open-type cells for forming the ducts 41. In fact, an elementary cell 42 is open if its empty volume communicates with that of at least a further immediately adjacent elementary cell 42. The communicating empty volumes of the immediately adjacent elementary cells 42 are part of one of the ducts 41 or one of the paths P1.

Conveniently, the elementary cells 42 are based on triply periodic minimal surfaces; for example, the elementary cells 42 could be gyroid-type or gyroid-shaped cells.

Preferably, the lattice structure 40 is self-supporting or self-supported on the tail 10 or shell 7. This means that the lattice structure 40 does not need to be further supported by further components but rather stands on its own. In particular, the lattice structure 40 can be manufactured by an additive manufacturing process without the aid of supports. More in particular, as is known in the sector of the additive manufacturing processes, the supports are additional elements characterized by having a product support function of the additive manufacturing process during the process, although not forming part of the product and thus having to be removed at the end of the process.

In the illustrated embodiment, the cavity 7b has the first cavity portion defining the passenger compartment 5, whereas the second cavity portion 7c is at least partially filled or occupied by the lattice structure 40.

The motor vehicle 1 further comprises a heat source 43 thermally coupled to the lattice structure 40 to conduct heat to or through the lattice structure 40.

According to some examples of this description, the heat source 43 could also be absent, just as independently the shell 7 or the tail 10 associated with the lattice structure 40 might not necessarily be permeable to the airflow and/or arranged to be externally struck by the airflow. In this case, the network of ducts 41 would not be necessary, just as the outlet 10d could be absent. Herein, the shells 7 or the tails 10 could be arranged at the opposite lateral ends of the floorboard 3 according to the axis Y with at least the portion 8 of the external volume interposed between the shells 7 or the tails 10 according to the axis Y and inferiorly delimited by the upper surface 15. Herein, the lattice structure 40 could be internally attached to one of the shells 7 or tails 10; alternatively, respective lattice structures 40 could be internally attached to the shells 7 or tails 10, respectively, each in a manner so as to form a single body with the respective of the shells 7 or the tails 10 and arranged to fill at least partially the respective cavity 7b or cavity portion 7c. In these examples, the various further detailed characteristics of the shells 7 or the tails 10 could be present, as well as absent.

The heat source 43 is configured to emit heat during its operation or that of the motor vehicle 1 and to transfer or transmit the emitted heat to the lattice structure 40 at least by conduction.

According to an example, the heat source 43 has an external structure or external casing 44, in particular fixed with respect to the tail 10 or the shell 7. The lattice structure 40 is attached to the external casing 44, for example so as to form a single body with the external casing 44. In this manner, the lattice structure 40 defines a plurality of thermal exchange fins for the external casing 44, thereby increasing in particular the thermal exchange surface of the external casing 44.

In general, preferably, the heat source 43 or the external casing 44 could be supported inside the cavity portion 7c with respect to the tail 10 by means of the lattice structure 40, in particular without further supporting elements, therefore only by means of the lattice structure 40.

The lattice structure 40 which absorbs or receives heat from the heat source 43 in turn transfers the heat to the portion of the airflow passed inside the cavity 7b or the cavity portion 7c and in particular flowing through the ducts 41. For example, the heat transfer from the lattice structure 40 to the portion of the airflow in the cavity 7b or cavity portion 7c, namely through the ducts 41, can occur by convection.

Preferably, the heat source 43 is located or extends at a central zone of the cavity 7b or cavity portion 7c, in particular according to the axis Z and/or according to the axis Y, or at a transverse section according to a plane orthogonal to the axis X. In particular, the tail 10 or the shell 7 has a cross-section according to a plane orthogonal to the axis X defining an external profile with a generally and substantially elliptical shape, i.e. substantially defining an ellipse (a circle is a particular type of ellipse); the center of the ellipse is in particular a point of the heat source 43. In other words, the heat source 43 is located at the center of the ellipse. The aforementioned central zone thus comprises the center of the ellipse.

Preferably, the lattice structure 40 branches from the central zone, in particular from the external casing 44, towards a periphery (in particular according to the axis Z and/or the axis Y) of the cavity 7b or the cavity portion 7c up to attaching to the tail 10 or the shell 7.

In this manner, the heat propagates naturally through the lattice structure 40 from the central zone, namely from the heat source 43, towards the periphery of the cavity 7b or the cavity portion 7c.

According to an example, the heat source 43 comprises a propulsion device for propulsion of the motor vehicle 1, for example an electric motor or an internal combustion engine 21, or an electrical energy storage device for storing electrical energy, for example a battery, a battery pack, a condenser, or the like.

Herein, the external casing 44 can comprise a casing of the motor 21 or of the electrical energy storage device.

Therefore, the motor 21 or the electrical energy storage device could be housed inside the cavity 7b or the cavity portion 7c.

According to a further example, the heat source 43 can comprise a portion of a cooling circuit 45.

In greater detail, the cooling circuit 45 is generally configured to cause a cooling fluid to circulate through a thermal exchange zone, in which the fluid comes into thermal contact with a warmer element or substance so as to absorb heat from the latter.

The aforementioned portion of the cooling circuit 45 causes the cooling fluid to circulate at and/or downstream of the thermal exchange zone, so that here the cooling fluid is warmer than the aerodynamic flow or more precisely of the portion of the airflow passed inside the cavity 7b or the cavity portion 7c.

For example, the cooling fluid could absorb heat at the thermal exchange zone from the motor 21 or the electrical energy storage device, namely more in general from a further portion of the heat source 43.

The portion of the cooling circuit 45 could comprise the external casing 44, herein for example comprising a pipe or a bundle of pipes in which the cooling fluid flows.

Alternatively or additionally, the portion of the cooling circuit 45 comprises pipes 46 extending through the lattice structure 40 for the circulation of the cooling fluid which is warmer than the airflow.

The pipes 46 could branch from the external casing 44, for example. Herein, the pipes 46 engage the external casing 44 and receive the cooling fluid from the inside of the external casing 44.

The external casing 44 is optional; the heat source 43 could be defined by the pipes 46 (or only by the pipes 46) and optionally by other components of the cooling circuit 45 which are part of the external casing 44 or different from the external casing 44, such as one or more tanks, one or more valves, one or more pumps or compressors, and the like.

The pipes 46 could comprise tunnels hollowed through the full parts (defined by solid material) of the lattice structure 40, or could be at least partially defined by a portion of the empty parts of the lattice structure 40, or still could comprise tubes arranged outside the lattice structure 40 or its full parts fixed to the lattice structure 40.

Preferably, the pipes 46 are fluidically (but not thermally) insulated with respect to the ducts 41. In other words, the portion of the airflow through the ducts 41 does not mix directly with the cooling fluid flowing through the pipes 46.

The motor vehicle 1 generally has a front end 31 and a rear end 32. In greater detail, the floorboard 3 or the surface 3b extends along the axis X starting from the front end 31 until ending at the rear end 32.

Conveniently, the body 2 defines an aerodynamic duct 30 extending along the axis X from the front end 31 to the rear end 32 of the motor vehicle 1 between the shell portions 4 or the shells 7 or the tails 10 according to the axis Y.

The aerodynamic duct 30 can be at least partially open at the top (namely exposed at the top) towards the outside of the motor vehicle 1.

In particular, the aerodynamic duct 30 comprises the channel portion 19 (covered at the top by the bridge element 16) .

Preferably, each of the tails 10 or the shells 7 is independently and particularly permeable at a zone or portion facing the aerodynamic duct 30 or laterally delimiting the aerodynamic duct 30, according to the axis Y, such that part of the airflow or aerodynamic flow along the aerodynamic duct 30 penetrates inside the cavity 7b or cavity portion 7c from the aerodynamic duct 30, in particular directly, conveniently passing laterally (according to the axis Y) through the above-mentioned zone or portion from the aerodynamic duct 30, i.e. from the center of the motor vehicle 1 according to the axis Y, to the cavity 7b or cavity portion 7c.

Based on the foregoing, the advantages of the motor vehicle 1 according to the invention are evident.

The motor vehicle 1 has a revolutionary construction with respect to the known common motor vehicles with the two passenger compartments 5 distinct and surrounded by the shells 7 spaced apart from each other according to the axis Y and preferably with ogival shape.

The lattice structures 40 inside the shells 7 or the tails 10 open towards the outside define optimal heat exchangers for the dissipation of the heat emitted by the heat sources 43.

In fact, the lattice structures 40, besides ensuring thermal exchange surfaces with large dimensions, also have a structural function for reinforcing the shells 7, which are located in aerodynamically effective zones from the point of view of the thermal exchange.

The shells 7 or the tails 10 with the lattice structures 40 are optimal places for positioning the motor 21 as part of the heat source 43. In this manner, the distribution of the bulks in the motor vehicle 1 is optimal.

Finally, it is clear that modifications and variations can be made to the motor vehicle 1 according to the invention which anyway do not depart from the scope of protection defined by the claims.

## Claims

1. Motor vehicle (1) comprising a body (2), in turn comprising
- a shell (7, 10) internally defining a cavity (7b, 7c) arranged to be externally struck by an airflow coming from outside the motor vehicle (1) during an advancement of the motor vehicle (1), and permeable to the airflow, such that a portion of the airflow penetrates inside the cavity (7b, 7c);
- a lattice structure (40) internally attached to the shell (7, 10) so as to form a single body with the shell (7, 10) and arranged to at least partially fill the cavity (7b, 7c) and define a network of ducts (41) inside the cavity (7b, 7c) to guide said portion of the airflow through the cavity (7b, 7c) towards an outlet (10d) from the shell (7, 10);
the motor vehicle comprising a heat source (43) thermally coupled to the lattice structure (40) to conduct heat through the lattice structure (40), so that the lattice structure (40) in turn transfers the heat to the portion of the airflow.

2. The motor vehicle according to claim 1, wherein the heat source (43) extends at a central zone of the cavity (7b, 7c).

3. The motor vehicle according to claim 2, wherein the lattice structure (40) branches from the central zone towards a periphery of the cavity (7b, 7c) up to attaching to the shell (7, 10), so that the heat propagates through the lattice structure (40) from the central zone towards the periphery.

4. The motor vehicle according to any of the preceding claims, wherein the heat source (43) comprises a portion of a cooling circuit (45) with pipes (46) extending through the lattice structure (40) for circulation of a cooling fluid warmer than said airflow.

5. The motor vehicle according to any of the preceding claims, wherein the shell (7, 10) is directly exposed to the outside of the motor vehicle (1) and to said airflow.

6. The motor vehicle according to any of the preceding claims, wherein the lattice structure (40) is defined by a plurality of interconnected elementary cells (42), wherein at least a part of the elementary cells (42) are open-type cells to form the network of ducts (41).

7. The motor vehicle according to claim 6, wherein the elementary cells (42) are based on triply periodic minimal surfaces.

8. The motor vehicle according to any of the preceding claims, wherein the lattice structure (40) is self-supporting, i.e. in particular it can be manufactured by an additive manufacturing process without the aid of additional supports.

9. The motor vehicle according to any of the preceding claims, wherein said cavity (7b, 7c) comprises a first cavity portion defining a corresponding passenger compartment (5) of the motor vehicle (1) and a second cavity portion (7c) at least partially filled by the lattice structure (40).

10. The motor vehicle according to claim 9, wherein the body (2) comprises a further said shell (7, 10) with a further cavity (7b, 7c), wherein the shells (7, 10) are arranged at respective opposite lateral ends of a floorboard (3) of the body (2) according to a pitch axis (Y) of the motor vehicle with at least one portion (8) of an external volume of the motor vehicle interposed between the shells (7, 10) according to the pitch axis (Y) and inferiorly delimited by an upper surface (15) of the floorboard (3).

11. The motor vehicle according to claim 10, wherein the body (2) comprises a further lattice structure (40) internally attached to the further shell (7, 10) so as to form a single body with the further shell (7, 10) and arranged to at least partially fill the further cavity (7b, 7c) and define a further network of ducts (41) inside the further cavity (7b, 7c) to guide a further portion of the airflow through the further cavity (7b, 7c) towards a further outlet (10d) from the further shell (7, 10).

12. The motor vehicle according to claim 10 or 11, wherein at least one of the shells (7) comprises a respective shell portion (4) comprising a dome (14) with a concavity facing the floorboard (3).

13. The motor vehicle according to claim 12, wherein the dome (14) has at least one section according to a plane orthogonal to a roll axis (X) of the motor vehicle (1), the section being shaped according to an ellipse arc.

14. The motor vehicle according to any of the preceding claims, further comprising at least one motor (21) for propulsion of the motor vehicle (1) and/or an electrical energy storage device for storing electrical energy, said motor (21) and/or electrical energy storage device being part of said heat source (43).

15. The motor vehicle according to claim 14, wherein said motor (21) and/or electrical energy storage device is housed inside the cavity (7b, 7c).
